# EUROPEAN PATENT APPLICATION

(11) **EP 4 836 312 A1**
(43) Date of publication of application: **04.11.2026**
(21) Application number: 25748453.5
(22) Date of filing: 10.01.2025
(51) Int. Cl.: H04B 7/06, H04B 7/0491, H04B 7/08, H04B 7/10

(54) **COMMUNICATION ANTENNA AND RADIO COMMUNICATION DEVICE**

(30) Priority: 31.01.2024 WO PCT/JP2024/003123
(71) Applicant: Tohoku University, Sendai-shi, Miyagi 980-8577 (JP)
(72) Inventor: SUEMATSU, Noriharu, Sendai-shi, Miyagi 980-8577 (JP); TSUKAMOTO, Satoshi, Sendai-shi, Miyagi 980-8577 (JP); FURUICHI, Tomoyuki, Sendai-shi, Miyagi 980-8577 (JP)
(74) Representative: Hoffmann Eitle
(86) International application number: PCT/JP2025/000735
(87) International publication number: WO 2025/164271

(57) **Abstract**

A communication antenna includes: a plurality of basic units (110) each being a digital beam forming element array that communicates in a predetermined frequency band, the plurality of basic units (110) being associated one with each of a plurality of predetermined frequency bands, at least a part of the plurality of predetermined frequency bands being different from one another, wherein the plurality of basic units (110) cover a frequency band wider than each of the plurality of predetermined frequency bands.

## Description

### [Technical Field]

The technique described herein relates to a communication antenna and a radio communication device.

### [Background Art]

In regard to the coverage of cell phone carriers in some countries, the population coverage is high but the area coverage is low.

For example, in regard to the coverage of cell phone carries in Japan, which may vary with a cell phone carrier and a frequency, the maximum population coverage is about 99 % whereas the maximum area coverage is about 70%, which means that at least 30 % of national land area is not covered.

### [Citation List]

### [Non-Patent Literature]

[NPL 1]
   Task Group on Study of Space Cellular Systems "Material 43-1 Report by the Space Cellular Study Task Group", Information and Communications Council, Ministry of Internal Affairs and Communications, February 3, 2021
[NPL 2]
   SUEMATSU, Noriharu, FURUICHI Tomoyuki, and TSUKAMOTO, satoshi, "A Basic Architecture Design of Direct Digital RF DBF Transceiver for Q/V-Band LEO Satellite On-Board Unit", The Institute of Electronics, Information and Communication Engineers, IEICE Technical Report, July 2023

### [Summary of Invention]

### [Technical Problem]

However, under a situation where a lot of users gather in an area in which communication via cell phones is not covered (i.e., not available) or which has a small communication capacity due to a natural disaster or an event, there is a possibility that stable communication cannot be provided.

According to an aspect of the embodiments, one of the objects of the present description is to provide a radio communication device that covers a wide range.

### [Solution to Problem]

According to an aspect of the embodiments, a communication antenna includes a plurality of basic units each being a digital beam forming element array that communicates in a predetermined frequency band, the plurality of basic units being associated one with each of a plurality of predetermined frequency bands, at least a part of frequency bands being different from one another, wherein the plurality of basic units cover a frequency band wider than each of the plurality of predetermined frequency bands.

### [Advantageous Effects of Invention]

As one aspect, a radio communication device that covers a wide range can be provided.

### [Brief Description of Drawings]

[FIG. 1]

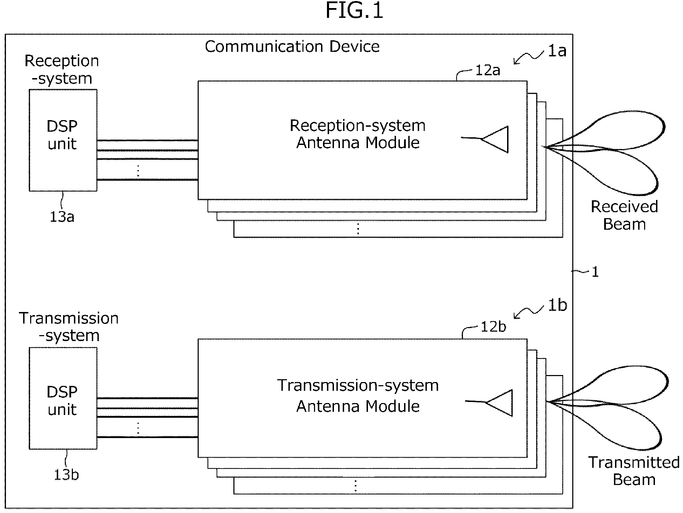

   FIG. 1 is a block diagram schematically illustrating an example of a configuration of a radio communication device according to a first embodiment.
[FIG. 2]

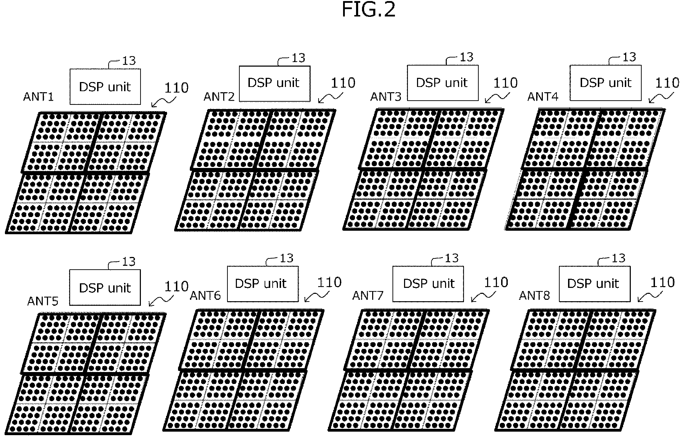

   FIG. 2 is a diagram illustrating an example of a configuration of a subarrayed Digital Beam Forming (DBF) antenna of the first embodiment.
[FIG. 3]

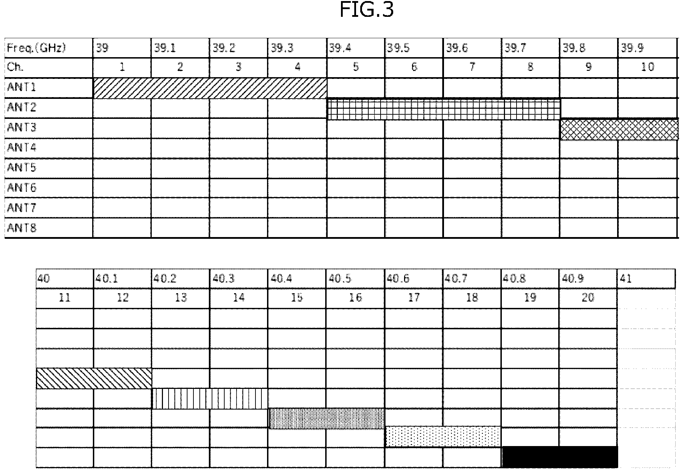

   FIG. 3 is a table of an example of frequency allocation in an eight-antenna configuration shown in FIG. 2.
[FIG. 4]

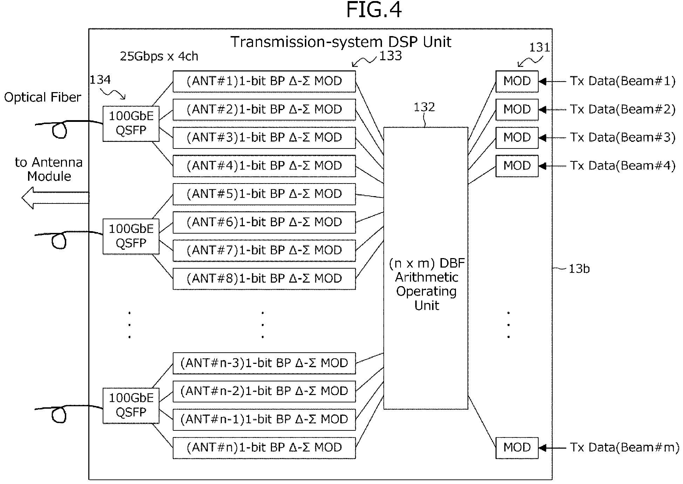

   FIG. 4 is a block diagram schematically illustrating an example of a configuration of a Digital Signal Processing (DSP) unit of a transmission system shown in FIG. 1.
[FIG. 5]

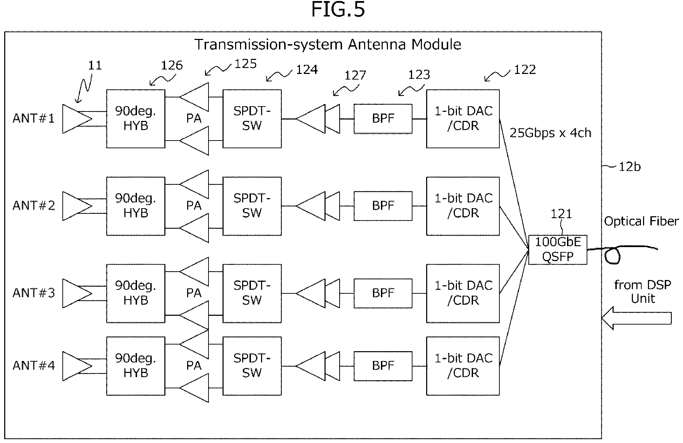

   FIG. 5 is a diagram schematically illustrating an example of a configuration of an antenna module of a transmission system shown in FIG. 1.
[FIG. 6]

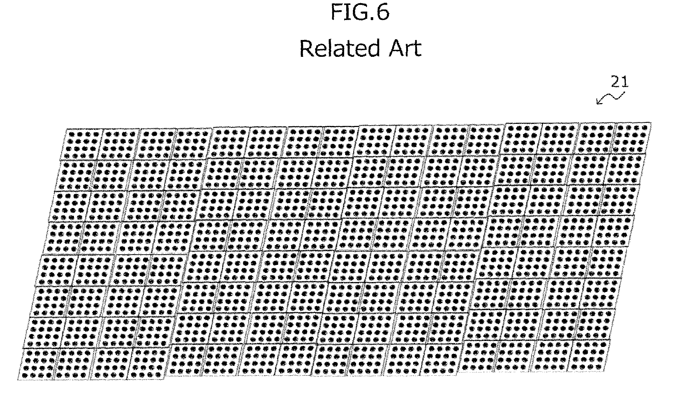

   FIG. 6 is a diagram illustrating an example of a configuration of a DBF antenna having one face with 2048 elements of a conventional example.
[FIG. 7]

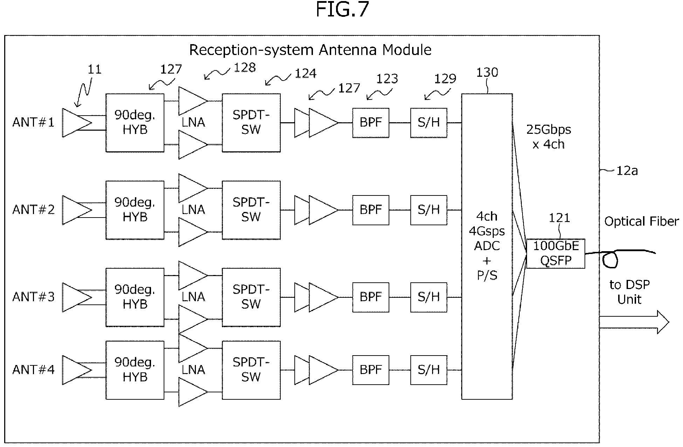

   FIG. 7 is a diagram schematically illustrating an example of a configuration of an antenna module of a reception system shown in FIG. 1.
[FIG. 8]

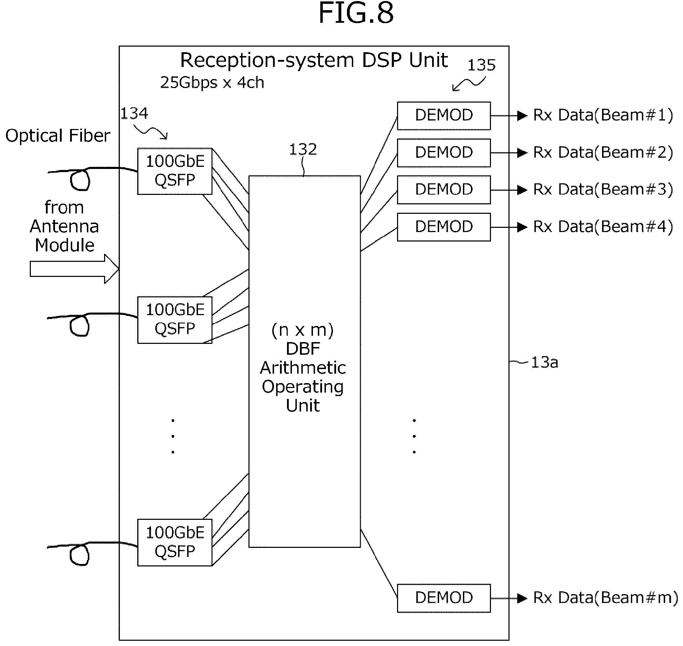

   FIG. 8 is a block diagram schematically illustrating an example of a configuration of a DSP unit of a reception system shown in FIG. 1.
[FIG. 9]

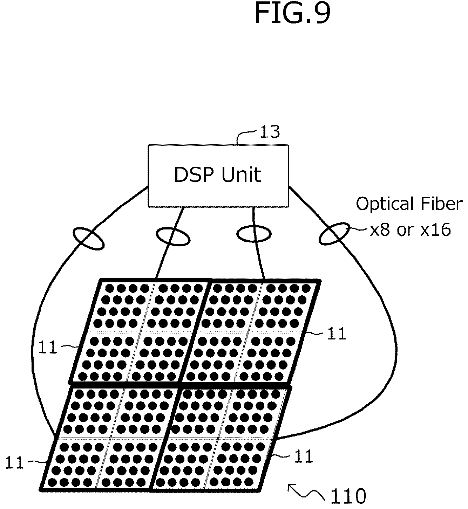

   FIG. 9 is a diagram schematically illustrating an example of arranging antenna elements in an antenna module shown in FIG. 1.
[FIG. 10]

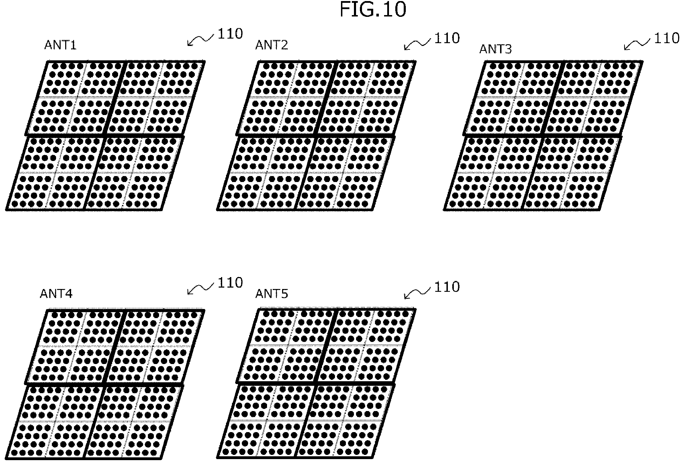

   FIG. 10 is a block diagram illustrating an example of arranging basic units in a five-antenna configuration of an embodiment.
[FIG. 11]

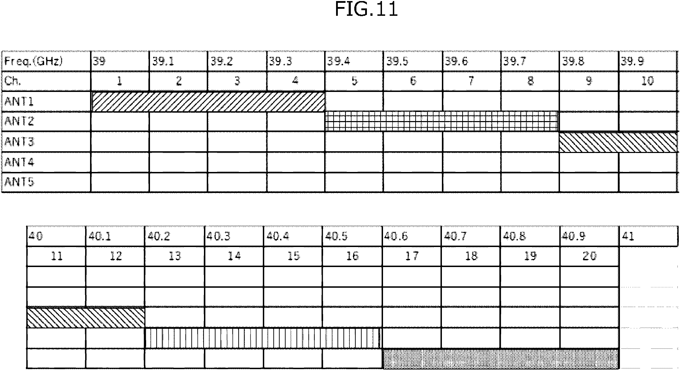

   FIG. 11 is a table of an example of frequency allocation in a five-antenna configuration shown in FIG. 10.
[FIG. 12]

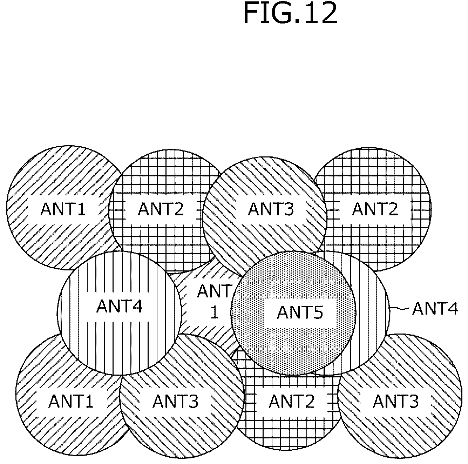

   FIG. 12 is a diagram illustrating an example of beam coverage corresponding to the frequency allocation shown in FIG. 11.
[FIG. 13]

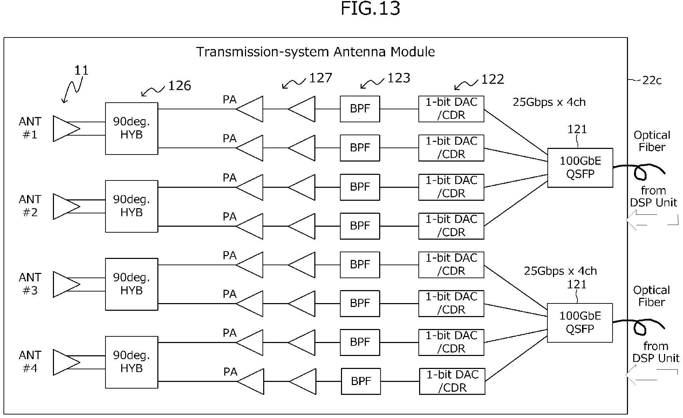

   FIG. 13 is a diagram schematically illustrating an example of a configuration of an antenna module of a transmission system of a conventional example.
[FIG. 14]

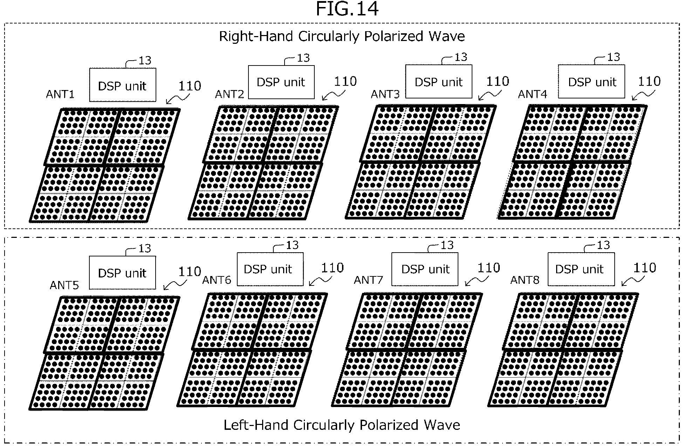

   FIG. 14 is a diagram illustrating an example of a configuration of a subarrayed DBF antenna according to a second embodiment.
[FIG. 15]

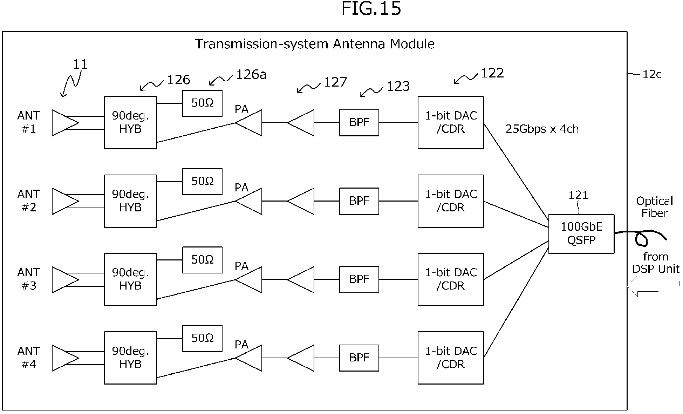

   FIG. 15 is a diagram schematically illustrating an example of a configuration of an antenna module of a transmission system of the second embodiment.
[FIG. 16]

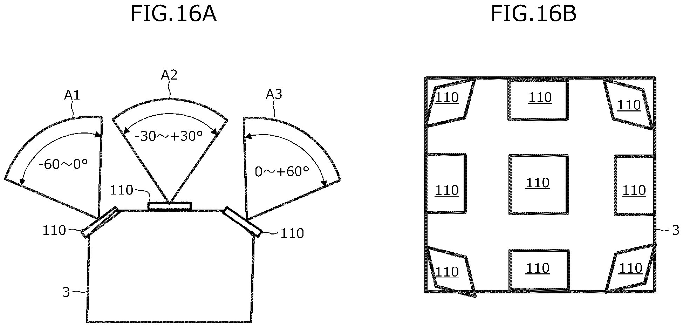

   FIG. 16 is a diagram schematically illustrating a first example of arranging a DBF antenna on a main body of an artificial satellite according to a third embodiment.
[FIG. 17]

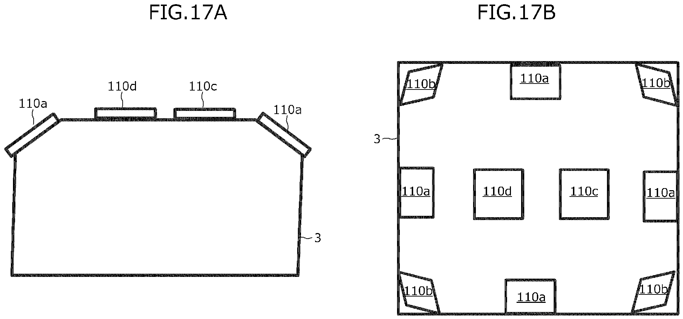

   FIG. 17 is a diagram schematically illustrating a second example of arranging a DBF antenna on a main body of an artificial satellite according to the third embodiment.
[FIG. 18]

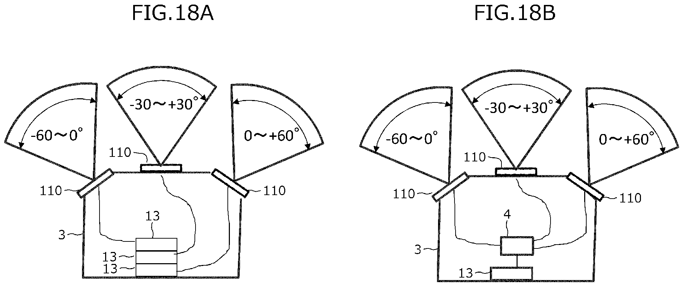

   FIG. 18 is a diagram schematically illustrating an example of arranging a DSP unit on a main body of an artificial satellite according to the third embodiment.

### [Description of Embodiments]

Hereinafter, embodiments will now be described with reference to the accompanying drawings. However, the following embodiments are merely illustrative and are not intended to exclude the application of various modifications and techniques not explicitly described in the embodiment. For example, the present embodiment can be variously modified and implemented without departing from the scope thereof.

Further, each of the drawings can include additional functions not illustrated therein to the elements illustrated in the drawing. In the drawings, like reference numbers designate the same or substantially same parts and elements unless otherwise specified.

### (A) Embodiments

### (A-1) First Embodiment

FIG. 1 is a block diagram schematically illustrating an example of a configuration of a radio communication device 1 according to the first embodiment.

A radio communication device 1 is, for example, mounted on an artificial satellite located at an altitude of 1000 km, communicates with a wireless communication terminal (not shown) on the ground, and includes a receiving unit 1a and a transmitting unit 1b as shown in FIG. 1. The radio communication device 1 may, for example, cover the Q/V-band, and have a DL (Down Link) of 40 GHz and an UL (Up Link) of 50 Hz.

Although only one receiving unit 1a and one transmitting unit 1b appear in FIG. 1, the radio communication device 1 may include multiple receiving units 1a and multiple transmitting units 1b.

The receiving unit 1a includes multiple reception-system antenna modules 12a and a DSP unit 13a. The transmitting unit 1b includes multiple transmission-system antenna modules 12b and a DSP unit 13b. The transmission-system antenna module 12b and the DSP unit 13b of the transmission system will be detailed below with reference to FIGs. 5 and 4, respectively. The reception-system antenna module 12a and the DSP unit 13a of the reception system will be detailed below with reference to FIGs. 7 and 8, respectively. Hereinafter, when not distinguished from each other, the reception-system antenna module 12a and the transmission-system antenna module 12b may each be simply referred to as "antenna module 12". Similarly, when not distinguished from each other, the DSP unit 13a of the reception system and the DSP unit 13b of the transmission system may each be referred to the "DSP unit 13".

FIG. 2 is a diagram illustrating an example of a configuration of a subarrayed DBF antenna of the first embodiment. FIG. 3 is a table of an example of frequency allocation in an eight-antenna configuration shown in FIG. 2.

In the example shown in FIG. 2, eight basic units 110 are arranged which pertain to a subarrayed DBF antenna (hereinafter, sometimes simply referred to as "DBF antenna"). The basic units 110 may each have 256 elements formed by arranging four sheets each with 8×8 antenna elements and may be provided one to each of the antenna modules 12 illustrated in FIG. 1. The basic units 110 (antenna modules 12) are connected to the DSP unit 13 and are assigned numbers of ANT1 to ANT8. The connection configuration of each basic unit 110 (antenna module 12) and the DSP unit 13 will be described below with reference to FIG. 9.

The basic units 110 of ANT1 to ANT8 shown in FIG. 2 do not necessarily have to be disposed adjacently, but may be disposed at a distance sufficiently distant with respect to the wavelength. Separating the distance between the units brings advantages of making heat dissipation and mounting of the antenna modules easier. In particular, this advantage is remarkable when the basic units 110 are mounted on a satellite or an aircraft, which have difficulty in heat dissipation.

In the example shown in FIG. 3, ANT1 to ANT8 are allocated respective frequencies by the basic units 110 each having the 256-element array shown in FIG. 2. The channels (each abbreviated to "ch.") 1-4 of 39-39.3 GHz are associated with ANT1, the channels 5-8 of 39.4-39.7 GHz are associated with ANT2, the channels 9-10 of 39.8-39.9 GHz are associated with ANT3, the channels 11-12 of 40-40.1 GHz are associated with ANT4, and the channels 13-14 of 40.2-40.3 GHz are associated with ANT5. In addition, the channels 15-16 of 40.4-40.5 GHz are associated with ANT6, the channels 17-18 of 40.6-40.7GHz are associated with ANT7, and the channels 19-20 of 40.8-40.9 GHz are associated with ANT8. That is, ANT1 and ANT2 each have a 400-MHz frequency band and ANT3 to ANYT8 each have a 200-MHz frequency band, which means that the total RF band is 2 GHz.

The basic units 110 are premised to be basically allocated different frequency channels, but the same frequency channel can be allocated to multiple basic units 110 in order to enhance the S/N at the time of reception on the ground by rising the antenna gain as a result of narrowing the beams and increasing transmission power for a particular ground service area. In this case, if the basic units 110 to which the same frequency channel is allocated are arranged to be adjacent to each other at a distance of one wavelength or less, the arrangement exhibits a feature that a better beam can be formed. In contrast, the units to which different frequency channels are surely allocated are preferably arranged at a distance of one wavelength or more from the viewpoints of heat dissipation and module mounting.

A continuous frequency bands may be allocated to one basic unit 110 of the multiple basic units 110. Besides, two or more basic units 110 among the multiple basic units 110 that have possibility of being allocated to the same frequency channel may be to be adjacent to each other at a distance of one wavelength or less. Furthermore, two adjacent basic units 110 of at least a part of the multiple basic units 110 may be arranged at an interval of a wavelength of the elements included in the digital beam forming element array or less, and may transmit or receive beams of the same frequency band as each other.

FIG. 4 is a block diagram schematically illustrating an example of a configuration of the DSP unit 13b of the transmission system shown in FIG. 1.

As shown in FIG. 4, the DSP unit 13b includes m modulators (MODs) 131, an m-input n-output DBF arithmetic operating unit 132, n delta sigma modulators 133 and QSFP modules (Quad Small Form-factor Pluggable Modules) 134. The letters m and n both represent natural numbers.

The m modulators 131 modulate each Tx data corresponding to Beams #1 to Beams #m. The DBF arithmetic operating unit 132 performs a DBF arithmetic operation on signals output from the m modulators 131 and inputs the results of the arithmetic operation to the n delta sigma modulators 133. The n delta sigma modulators 133 are associated one with each of ANT#1 to ANT#n, and perform delta-sigma modulation on outputs from the DBF arithmetic operating unit 132. The QSFP modules 134 convert an electric signal into an optical signal and outputs the optical signal to the antenna module 12 via an optical fiber.

An attempt to successfully achieve a beamwidth of about 7° and a beam steering angle of ±45° requires at least about 256 antenna elements as shown in FIG. 2. In order to achieve a configuration that is scalable with respect to the number of antenna elements and that can be downsized and reduce the cost, one antenna module is configured with four antenna elements.

The connection between the DSP unit 13b and the transmission-system antenna module 12b is configured with a QSFP module 134 for 100 GbE commercially available. This E/O and O/E module transmits optical wavelength multiplexing (WDM) of 25 Gbps via four channels, and can transmit data of signals of four antenna elements which have each been one-bit modulated at 25 Gbps by the DSP unit 13b with a single optical fiber and a pair of QSFP modules 134.

An attempt to successfully achieve 256 elements and 160 beams corresponds m and n of FIG. 4 of 160 and 256, respectively, which requires the DBF arithmetic operating unit 132 to undergo considerable large-scale DBF arithmetic operation. The delta sigma modulators 133 of one-bit band pass are required as many as the number of antenna elements, and one-bit array output from each delta sigma modulator 133 is required to be high speed of 25 Gbps.

In each of the DSP unit 13b and the antenna module 12b, 256/4=64 QSFP modules 134 are required. A 256-element array antenna is configured by arranging 64 antenna modules each mounting thereon four elements. Since the width of the QSFP module 134 is slightly wider than the lateral width of a four-element antenna, the QSFP module 134 may be downsized by transmitting data of eight elements with a single QSFP module 134 using one-bit modulator of 12.5 Gpbs per element or by mounting a component (e.g., ROSA) in the QSFP module 134 directly on the module board in place of using the QSFP module 134. Alternatively, the same advantages can be obtained in an optical fiber transmission system except for the QSFP module 134 or an electric signal transmission system such as a coaxial cable.

FIG. 5 is a diagram schematically illustrating an example of a configuration of the antenna module 12b of the transmission system shown in FIG. 1.

In the example of FIG. 5, the antenna module 12b consists of four elements associated with ANT#1 to ANT#4, and includes a QSFP module 121, DAC/CDRs 122 (Digital-Analog Converters/Clock Data Recoveries), BPFs 123, amplifiers 127, SPDT-SWs 124 (Single-Pole Double-Throw Switches), PAs 125 (Power Amplifiers), 90-degree HYB circuits 126, and DBF antennas 11.

The QSFP module 121 converts an optical signal received from the DSP unit 13b via the optical fiber into an electric signal. Each DAC/CDR 122 converts the digital signal output by the QSFP module 121 into an analog signal and separates clock and data. Each BPF 123 is, for example, a spurious eliminating filter, which removes alias spurious when the digital signal is converted back to an analog signal. Each amplifier 127 amplifies a signal of a band that has passed through the BPF 123. Each SPDT-SW 124 inputs an input from the amplifier 127 into either one of the two subsequent PAs 125. Each PA 125 amplifies the output of the signal from the SPDT-SW 124. The 90-degree HYB circuit 126 outputs a signals to the antenna 11 such that the two output signals have a 90° phase difference. Each DBF antenna 11 sends transmit beams.

The DBF antenna 11 based on an array antenna has the advantage that, unlike an analog phased array antenna using a phase shifter, multiple beams can be formed at the same time. Since sharper beams are preferred for radars, it is common to configure a DBF antenna 11 with a one-face array antenna having multiple elements. Assuming that all the antenna elements handle signals in 2-GHz band and a 120-beam signal, the scale of DBF arithmetic operation in the DSP unit 13b increases, and also the volume of arithmetic operation by the delta sigma modulator 133 of one-bit band pass increases.

FIG. 6 is a diagram illustrating an example of a configuration of the DBF antenna 11 having one face with 2048 elements of a conventional example.

In the present embodiment, in order to reduce the load on the DSP unit 13b, the DBF antenna 11, which conventionally has a configuration of one face with 2048 elements as shown in FIG. 6, is subarrayed into DBF antennas 11 having multiple faces (subarrays) as shown in FIG. 2. Consequently, in order to make up transmission electric power per element, each face of the subarray configuration is made to have 256 elements. Accordingly, if the DBF antenna 11 is subarrayed to have eight subarrays, the one subarray is configured to have 256 × 8 = 2048 elements.

If being subarrayed, each DBF antenna 11 is connected to an independent DSP unit 13b. In the table shown in FIG. 3, frequency bands of beams handled by the subarrayed DBF antennas 11 are shown. For example, ANT1 takes charge of 400 MHz of Ch1-Ch4 in 2 GHz band. Subarraying of the antenna can narrow a frequency band width that each face takes charge, so that a volume of arithmetic operation of the delta sigma modulator 133 of one-bit band pass can be reduced.

In relation to the number of beams, a one-face configuration deals with 160 beams, and accordingly, in the configuration having eight subarrays, every subarray deals with the number of beams of 160/8=20 beams, which can reduce a volume of arithmetic operation in the DSP unit 13b.

For example, in a DBF antenna of a configuration having one face with 2048 elements, the volume of DSP arithmetic operation in the DBF arithmetic operating unit 132 is calculated to be (2 GHz band × 160 beams × 2048 elements) × 1 ANT = 655360 (a.u.; arbitrary unit). In contrast, in a DBF antenna of a configuration having eight subarrays each having 256 elements, the volume of DSP arithmetic operation in the DBF arithmetic operating unit 132 is calculated to be (400 MHz band × 20 beams × 256 elements) × 2 ANTs + (200 MHz band × 20 beams × 256 elements) × 6 ANTs = 10240 (a.u).

Further, in a DBF antenna of a configuration having one face with 2048 elements, the volume of DSP arithmetic operation in the delta sigma modulator 133 is calculated to be (2 GHz band × 2048 elements) × 1 ANT = 4096 (a.u.). On the other hand, in a DBF antenna of a configuration having eight subarrays each having 256 elements, the volume of DSP arithmetic operation in the delta sigma modulator 133 is calculated to be (400 MHz band × 256 elements) × 2 ANTs + (200 MHz band × 256 elements) × 6 ANTs = 206.2 (a.u).

Subarraying of the DBF antenna 11 in this case remarkably reduces the volume of arithmetic operation of the DBF arithmetic operating unit 132 and the volume of arithmetic operation of the delta sigma modulator 133 of one-bit band pass to about 1/64 and about 1/20, respectively.

Above description relates to a configuration that uses a delta sigma modulator of one-bit band pass as a transmission system, and alternatively, the scheme of the above description can be applied to a conventional transmission-system configuration like the radio communication device 1 illustrated in FIG. 1. Alternatively, the delta sigma modulators 133 of FIG. 4 may be removed and the DAC/CDRs 122 of FIG. 5 may be replaced by multi-bit DACs and up-converters (frequency converters from intermediate frequency (IF) to RF). In this alternative, the reduction effect of the DSP arithmetic operation is only that of the DSP arithmetic operation in the above the DBF arithmetic operating unit 132.

FIG. 7 is a diagram schematically illustrating an example of a configuration of the antenna module 12a of the reception system shown in FIG. 1. FIG. 8 is a block diagram schematically illustrating an example of a configuration of the DSP unit 13a of the reception system shown in FIG. 1.

The antenna module 12a of the example of FIG. 7 consists of four elements associated with ANT#1 to ANT#4, and includes DBF antennas 11, 90-degrese HYB circuits 126, LNAs 128, SPDT-SWs 124, amplifiers 127, BPFs 123, S/H (Sample/Hold) circuits 129, an ADC+P/S 130 (Analog Digital Converter + Parallel/Serial) of 4ch/4Gsps and a QSFP 121 of 100 GbE.

As shown in FIG. 8, the DSP unit 13a includes n QSFP modules 134, an n-input m-output DBF arithmetic operating units 132 and m demodulators 135 (DEMODs). The letters m and n both represent natural numbers. Alternatively, the same advantages can be obtained in an optical fiber transmission system except for the QSFP module 134 or an electric signal transmission system such as a coaxial cable.

A subarrayed DBF may be used for a reception system, and the DBF arithmetic operation of the DSP unit 13 can be reduced like the DBF arithmetic operation of the conventional transmission-system configuration.

The transmitting unit 1b includes multiple basic units 110 each consisting of a DBF antenna 11 having multiple antenna elements, and multiple sets of transmission-system antenna modules 12b each connected to one of the multiple basic units 110 and each performing transmission process on a signal to be transmitted from the associated basic unit 110. In addition, the transmitting unit 1b may perform delta-sigma modulation of one-bit band pass on each of the multiple frequency bands associated with the multiple basic units 110, using multiple delta sigma modulators 133, and a transmitting process of beam may be executed.

The receiving unit 1a includes multiple basic units 110 each consisting of a DBF antenna 11 having multiple antenna elements, and multiple sets of reception-system antenna modules 12a connected one to each of the multiple basic units 110 and each performing a reception process on a signal received from the associated basic unit 110.

For example, the respective spot beams of the reception system and the transmission system may be 50 km in diameter, the respective beam widths may be 6 degrees at the minimum, and the respective beam steering angles may be 45 degrees. Besides, one frequency channel may be associated with one beam. For example, an RF band width may be wider than 2 GHz, and the band width of one channel may be switched among 100 MHz, 200 MHz and 400 MHz. The DBF antenna 11 may be a full DBF antenna for more flexible beamforming.

FIG. 9 is a diagram schematically illustrating an example of arranging antenna elements in the antenna module 12 shown in FIG. 1.

As illustrated in FIG. 9, in each of the receiving unit 1a and the transmitting unit 1b of the radio communication device 1, each basic unit 110 is formed by arranging radiation faces of four DBF antennas 11 each having 8×8 elements. Each DBF antenna 11 may be connected to the DSP unit 13 via, for example, eight or sixteen optical fibers.

The BB (Broad Band) band is 400 MHz at the maximum. For SC and 64QAM, the theoretical limit is 6 bit/Hz, and the theoretical upper limit of the transmission rate of one beam is 2.4 Gbps. Since the Japanese land area is about 380,000 km², assuming that one beam has a diameter of 100 km (assuming a radius of 50 km and a satellite altitude of 1000 km) and the overlay is 1/2, the relationship 380,000 × 2 (overlay)/ (50*50*π) =97≒100 beams is established. An attempt of covering the land area with four ANTs (i.e., repeatedly using four frequency bands) requires 2.4 Gbps × 25 beams = 60 Gbps per one ANT. Including one ANT for a redundant system results in 300 Gbps in five ANTs in total.

The total number of ANTs is a variable parameter of from 3 to 7. Assuming that the total number of ANTs is 7+1 (redundant system) ANTs, the relationship 2.4 Gbps × 100/7 beam (about 14 beam) = 34.3 Gbps is established per one ANT, and the bandwidth of the total eight ANTs is about 274 Gbps.

Considering error correction, guard band, and the like, it is also conceivable to set 1/2 of the above-described capacity to a nominal value. On an assumption one ANT covers 25 (14) beams and 30 (17.2) Gbps, one satellite covers 120(120)Gbps.I f one satellite is configured to have five ANTs including one ANT for a redundancy system (temporary beams), it covers 150 (137) Gbps.

FIG. 10 is a block diagram illustrating an example of arranging the basic units 110 in a five-antenna configuration of an embodiment. FIG. 11 is a table of an example of frequency allocation in the five-antenna configuration shown in FIG. 10.

In the example shown in FIG. 10, five basic units 110 shown in FIG. 9 are arranged. The respective basic units 110 are connected to the DSP unit 13 to each and are assigned the numbers of ANT1 to ANT5. Like the example illustrated in FIG. 9, each basic unit 110 may be connected to the DSP unit 13 via an optical fiber.

The basic units 110 having consecutive numbers among ANT1 to ANT5 illustrated in FIG. 10 may be arranged at adjacent positions.

In the example shown in FIG. 11, ANT1 to ANT5 are allocated respective frequencies by the basic units 110 each having the 256-element array shown in FIG. 10. The channels (each abbreviated to "ch.") 1-4 of the 39-39.3 GHz are associated with ANT1, the channels 5-8 of 39.4-39.7 GHz are associated with ANT2, the channels 9-12 of 39.8-40.1 GHz are associated with ANT3, the channels 13-16 of 40.2-40.5 GHz are associated with ANT4, and the channels 17-20 of 40.6-40.9 GHz are associated with ANT5. That is, ANT1 to ANT5 each have a 400-MHz frequency band, which means that the total RF band is 2 GHz.

The radio communication device 1 may include multiple basic units 110 each being a digital beam forming array that communicates in a predetermined frequency band (e.g., 100 MHz band, 200 MHz band, or 400 MHz band). The predetermined frequency bands associated with the multiple basic units 110 are at least partly different from one another. The multiple basic units 110 cover a frequency band (e.g., 2 GHz band) wider than each of the predetermined frequency bands.

In the example illustrated in FIG. 11, the frequency bands each associated with one of ANT1 to ANT5 do not overlap, but may alternatively partly overlap. This alternative can make the system redundant in preparation for a state where any basic unit 110 cannot be used.

FIG. 12 is a diagram schematically illustrating an example of beam coverage corresponding to the frequency allocation shown in FIG. 11.

The hatching in each circle of beam coverage illustrated in FIG. 12 corresponds to the hatching of each allocated frequencies to ANT1 to ANT5 illustrated in FIG. 11.

To the adjacent beams, different frequency channels of different ANTs may be set. For example, ANT5 may be used not only as a redundant system, but also as temporary beams used during a disaster and an event.

According to the above-described embodiment, it is possible to provide radio communication that covers a wide range. Specifically, arranging multiple basic units of the DBF antenna ensures scalability and redundancy that match the communication capacity, and also has an advantage that the volume of arithmetic operation of the DSP unit of the each DBF antenna unit can be reduced and consumption power and heat generation can be suppressed.

Conventionally, a DBF antenna consists of only one-face array. For communication via a millimeter wave, a high-gain antenna can be obtained even if the opening area of the antenna is small, so that the antenna can be subarrayed. A one-face array has problems such as mounting, heat generation, and excessively high directivity gain, for example.

### (A-2) Second Embodiment

The basic unit 110 of a DBF antenna of a conventional example and the above first embodiment is configured to transmit radio wave of both right-hand circularly polarized wave and left-hand circularly polarized wave.

FIG. 13 is a diagram schematically illustrating an example of a configuration of an antenna module 22c of a transmission system of a conventional example.

In the example of FIG. 13, a transmission-system antenna module 22c consists of four elements associated with ANT#1 to ANT#4, and includes two QSFP modules 121, and four 90-degree HYB circuits 126 and four DBF antennas 11 that associate one for each of ANT#1 to ANT#4. Also, the elements associated with ANT#1 to ANT#4 each include two sets of DAC/CDRs 122, two sets of BPFs 123 and two sets of PAs 127 (Power Amplifier; amplifier) for right-hand circularly polarized wave and left-hand circularly polarized wave.

A transmission-system antenna module 22c of the conventional example shown in FIG. 13 includes two sets of DAC/CDRs 122, two sets of BPFs 123, and two sets of amplifiers 127 for right-hand circularly polarized wave and left-hand circularly polarized wave, and therefore may become too large in size to be mounted on the main body 3 of an artificial satellite (to be detailed below with reference to FIGs. 16-18).

In the DBF antenna of the second embodiment, right-hand circularly polarized wave and left-hand circularly polarized wave are each allocated in units of the basic unit 110 having 256 elements.

FIG. 14 is a diagram illustrating an example of a configuration of a subarrayed DBF antenna according to the second embodiment.

In the example shown in FIG. 14, eight basic units 110 of the DBF antenna are arranged in the same manner as one shown in FIG. 2 in the first embodiment. The basic units 110 (antenna modules 12) are connected to the respective DSP units 13 to each and are assigned numbers of from ANT1 to ANT8.

In the second embodiment, among the eight basic units 110, ANT1 to ANT4 (first group) are allocated for transmitting right-hand circularly polarized wave, and ANT5 to ANT8 (second group) are allocated for transmitting left-handed circularly polarized wave. The numbers of basic units 110 to be allocated to transmission of right-handed circularly polarized wave and transmission of left-handed circularly polarized wave can be variously changed.

Allocation of right-handed or left-handed circularly polarized wave in units of basic unit 110 having 256 elements eliminates the requirement for circuits for switching polarized wave or circuits for handling both polarized waves in a transmitter and a receiver connected to the antenna, which can downsize the radio communication device 1, increase the output of the transmitter, and reduce the noise in the receiver.

FIG. 15 is a diagram schematically illustrating an example of a configuration of an antenna module 12c of the transmission system of the second embodiment.

The second embodiment may use the same radio communication device 1 as shown in FIG. 1 in the first embodiment. However, in the transmission system of the radio communication device 1 illustrated in FIG. 1, the transmission-system antenna module 12c illustrated in FIG. 15 is used in place of the transmission-system antenna module 12b.

In the example shown in FIG. 15, the antenna module 12c consists of four elements associated with ANT#1 to ANT#4, and includes a QSFP module 121, DAC/CDRs 122, BPFs 123, PAs 127 (Power Amplifier; amplifier), 90-degree HYB circuits 126, resistors 126a, and DBF antennas 11.

Each resistor 126a may be, for example, an isolation resistor of 50 Ω and avoids leakage of radio waves.

In the transmission-system antenna module 12c illustrated in FIG. 15, the SPDT-SWs 124 are not provided as compared with the transmission-system antenna module 12b illustrated in FIG. 5 in the first embodiment. As a result, the transmission power can be increased, and the electric power efficiency of the transmitter can be enhanced. In addition, the transmission-system antenna module 12c shown in FIG. 15 has a simple circuitry configuration than the transmission-system antenna module 22c of the conventional example shown in FIG. 13 and therefore can be formed to be small in size.

The reception-system of the second embodiment may be the same as the reception-system antenna module 12a illustrated in FIG. 1 in the first embodiment.

### (A-3) Third Embodiment

FIG. 16 is diagrams schematically illustrating a first example of arranging a DBF antenna on a main body 3 of an artificial satellite according to the third embodiment. FIG. 16A is a cross-sectional view of the main body 3 of the artificial satellite, and FIG. 16B is a front view of the main body 3 of the artificial satellite.

If the gain of the antenna is increased, the radiation pattern may be narrowed and the beam may not be steered.

As a solution to the above, in the example shown in FIG. 16, for example, even if the beam steering angle of the basic unit 110 of the DBF antenna having 256 elements is set to ±30°, arranging the basic units 110 on the main body 3 of the artificial satellite to be angled with respect to each other can reserve a coverage area.

In FIG. 16B, on a face partly having curved surface of the main body 3 of an artificial satellite, 3 x 3 basic units 110, which means nine units in total, are arranged. The number of basic units 110 to be arranged may be variously changed. Alternatively, one basic unit 110 arranged at the center in the example of FIG. 16B is omitted and accordingly, eight basic units 110 may be arranged, or four basic units 110 may be arranged only at the four corners in the example of FIG. 16B.

As shown in FIG. 16A, for example, the beam of the reference sign A1 may be set to have a beam steering of - 60° to 0°; the beam of the reference sign A2 may be set to have a beam steering of -30° to +30°, and the beam of the reference sign A3 may be set to have a beam steering of 0° to +60°.

FIG. 17 is a diagram schematically illustrating a second example of arranging a DBF antenna on a main body 3 of an artificial satellite according to third embodiment. FIG. 17A is a cross-sectional view of the main body 3 of the artificial satellite, and FIG. 17B is a front view of the main body 3 of an artificial satellite.

If basic units 110 are allocated to the right-handed are left-handed circularly polarization waves as in the second embodiment described above, the DBF antennas may be arranged as shown by the examples of FIGs. 17A and 17B.

On a face partly having curved surface of the main body 3 of an artificial satellite shown in FIGs. 17A and 17B, four basic units 110a for transmitting right-handed circularly polarized wave (first group) are arranged at the midpoints of the four sides, four basic units 110b for transmitting left-handed circularly polarized wave (second group) are arranged at the four corners, one basic unit 110c for receiving right-handed circularly polarized wave (third group) is arranged in the vicinity of the center, and one basic unit 110d for receiving left-handed circularly polarized wave (fourth group) is arranged in the vicinity of the center. The number and the positions of each of the basic units 110a for transmitting right-handed circularly polarized wave, the basic units 110b for transmitting left-handed circularly polarized wave, the basic units 110c for receiving right-handed circularly polarized wave, and the basic units 110d for receiving left-handed circularly polarized wave may be variously changed.

If basic units 110 are allocated to the right-handed and left-handed circularly polarization waves as in the second embodiment, a coverage area can be ensured in the same manner as shown in FIG. 16.

FIG. 18 is a diagram schematically illustrating an example of arranging a DSP unit 13 on a main body 3 of an artificial satellite according to the third embodiment. FIG. 18A shows an example in which one DSP unit 13 is provided for each basic unit 110, and FIG. 18B shows an example in which one DSP unit 13 is provided for multiple basic units 110.

In the example illustrated in FIG. 18A, the main body 3 of an artificial satellite includes three DSP unit 13 connected one to each of three basic units 110. Each basic unit 110 and the associated DSP unit 13 may be connected by an optical fiber. The number of basic units 110 and the number of DSP units 13 may be variously changed.

In the example illustrated in FIG. 18B, the main body 3 of an artificial satellite includes one DSP unit 13 and one switch 4 for three basic units 110. The number of DSP units 13 may be more than one as far as the number is smaller than the number of basic units 110. The number of basic unit 110 may also be variously changed.

The DSP unit 13 is connected to the respective basic units 110 via a switch 4. The DSP unit 13 may be connected to the switch 4 via an optical fiber and similarly the switch 4 and each basic unit 110 may be connected by an optical fiber. The switch 4 may be an optical switch or may be a circuit that turns on and off the respective basic units 110. In a configuration provided with multiple DSP units 13, the switch 4 may be a switching matrix (in other words, a crossbar switch).

If multiple basic units 110 for transmitting right-hand circularly polarized wave and left-hand circularly polarized wave are redundantly arranged as shown in FIG. 17, the example of arranging the DSP units 13 shown in FIG. 18B, which does not use an antenna of a low-traffic region, enhances electric-power efficiency, and consequently, the scale of the radio communication device 1 can be reduced because the number of DSP unit 13 can be reduced.

### (B) Miscellaneous

The disclosed technique is not limited to the above-described embodiments, and various changes and modifications can be suggested without departing from the scope of each embodiment. The respective configurations and processes of the embodiments can be selected, omitted, and combined according to the requirement.

The above embodiments assume that the radio communication device 1 is mounted on the artificial satellites, but are not limited to this configuration. Alternatively, the radio communication device 1 may be used in a terrestrial system. Also in this alternative, the same effects as those of the above-described embodiments can be obtained.

The above-described embodiment uses the DBF antenna 11 including 256 elements as the basic unit 110, but is not limited to this configuration. Alternatively, the basic unit 110 may be formed by, for example, 64 elements, 16 elements, or 8 elements among the 256 elements illustrated in FIG. 9, or may be formed by elements except for the above numbers or by elements more than 256 elements. With this configuration, the frequencies of ANT1 to ANT 5 shown in FIG. 10 or the frequencies of ANT1 to ANT8 shown in FIG. 2 are allocated to the basic units 110 formed of various numbers of elements.

The above-described embodiment separately configures the transmitting antenna and the receiving antenna, but can obtain the same advantageous effect if using a transmitting/receiving antenna module that shares the same antenna both in transmission and reception.

### [Reference Signs List]

- 1: Radio communication device
- 1a: Receiving unit
- 1b: Transmitting unit
- 11: DBF antenna
- 110, 110a-110d: Basic unit
- 12a, 12b, 12c, 22c: Antenna module
- 121,134: QSFP module
- 122: DAC/CDR
- 123: BPF
- 124: SPDT-SW
- 125, 127: PA
- 125a: Resistor
- 126: 90-degree HYB circuit
- 128: LNA
- 129: S/H circuit
- 130: ADC+P/S
- 13a, 13b: DSP unit
- 131: Modulator
- 132: DBF arithmetic operating unit
- 133: Digital sigma modulator
- 134: QSFP
- 135: Demodulator
- 3: Main body of artificial satellite
- 4: Switch

## Claims

1. A communication antenna comprising:
a plurality of basic units each being a digital beam forming element array that communicates in a predetermined frequency band, the plurality of basic units being associated one with each of a plurality of predetermined frequency bands, at least a part of the plurality of predetermined frequency bands being different from one another, wherein
the plurality of basic units cover a frequency band wider than each of the plurality of predetermined frequency bands.

2. The communication antenna according to claim 1, wherein
continuous frequency bands are allocated to one of the plurality of basic units.

3. The communication antenna according to claim 1 or 2, wherein
two or more of the plurality of basic units having possibility of being allocated a same frequency channel are arranged contiguously at a distance of one wavelength or less.

4. The communication antenna according to claim 1 or 2, wherein
delta-sigma modulation of one-bit band pass is performed on each of the plurality of frequency bands associated with the plurality of basic units, using a plurality of modulating units, and a transmitting process of beam is executed.

5. The communication antenna according to claim 1 or 2, wherein
one or more of the plurality of basic units classified into a first group transmit right-hand circularly polarized wave, and
one or more of the plurality of basic units classified into a second group transmit left-hand circularly polarized wave.

6. The communication antenna according to claim 1 or 2, wherein
at least a part of the plurality of basic units are arranged to be angled in respective planar directions of the part of the plurality of basic units to each other.

7. A radio communication device comprising:
a receiving unit comprising a plurality of reception-system basic units each being a first digital beam forming element array that communicates in a predetermined frequency band, and a plurality of receiving antenna modules connected one to each of the plurality of reception-system basic units, the plurality of reception-system basic units being associated one with each of a plurality of predetermined frequency bands, at least a part of the plurality of predetermined frequency bands being different from one another, the plurality of receiving antenna modules performing receiving processing on signals received from the plurality of reception-system basic units; and
a transmitting unit comprising a plurality of transmission-system basic units each being a second digital beam forming element array that communicates in the predetermined frequency band, and a plurality of transmitting antenna modules connected one to each of the plurality of transmission-system basic units, the plurality of transmission-system basic units being associated one with each of a plurality of predetermined frequency bands, at least a part of the plurality of predetermined frequency bands being different from one another, the plurality of transmitting antenna modules performing transmitting processing on signals to be transmitted from the plurality of transmission-system basic units, wherein
the plurality of reception-system basic units and the plurality of transmission-system basic units cover a frequency band wider than each of the plurality of predetermined frequency bands.

8. The radio communication device according to claim 7, wherein
continuous frequency bands are allocated to one of the plurality of reception-system basic units; and
continuous frequency bands are allocated to one of the plurality of transmission-system basic units.

9. The radio communication device according to claim 7 or 8, wherein
two neighboring reception-system basic units among the plurality of reception-system basic units are arranged at a distance approximately same as a distance between respective elements included in the first digital beam forming element array and receive beams of a same frequency band to each other; and
two neighboring transmission-system basic units among the plurality of transmission-system basic units are arranged at a distance approximately same as a distance between respective elements included in the second digital beam forming element array and transmit beams of a same frequency band to each other.

10. The radio communication device according to claim 7 or 8, wherein
the transmitting unit further comprises a plurality of modulating units that perform delta-sigma modulation of one-bit band pass on the plurality of frequency bands associated with the transmission-system plurality of basic units.

11. The radio communication device according to claim 7 or 8, wherein
one or more of the plurality of transmission-system basic units classified into a first group transmit right-hand circularly polarized wave,
one or more of the plurality of transmission-system basic units classified into a second group transmit left-hand circularly polarized wave,
one or more of the plurality of reception-system basic units classified into a third group receive right-hand circularly polarized wave, and
one or more of the plurality of reception-system basic units classified into a fourth group receive left-hand circularly polarized wave.

12. The radio communication device according to claim 7 or 8, wherein
at least a part of the plurality of transmission-system basic units are arranged to be angled in respective planar directions of the part of the plurality of transmission-system basic units to each other.

13. The radio communication device according to claim 7 or 8, further comprising:
a digital signal processing unit that inputs a signal into the plurality of transmitting antenna modules; and
a switch, wherein
one of the plurality of transmission-system basic units is operated by switching a connection between the plurality of transmission-system basic units and the digital signal processing unit by the switch.
